Europäisches Patentamt

European Patent Office

Office européen des brevets

(11) Publication number: **0 246 508**
**B1**

(12) **EUROPEAN PATENT SPECIFICATION**

(45) Date of publication of patent specification: **20.06.90**　　(51) Int. Cl.⁵: **F 16 G 1/08**

(21) Application number: **87106673.4**

(22) Date of filing: **07.05.87**

(54) Flexible belt and its relative transmission.

(30) Priority: **21.05.86 IT 2051086**

(43) Date of publication of application:
**25.11.87 Bulletin 87/48**

(45) Publication of the grant of the patent:
**20.06.90 Bulletin 90/25**

(84) Designated Contracting States:
**AT BE DE ES FR GB NL SE**

(56) References cited:
**EP-A-0 215 226**
**FR-A-1 166 734**
**FR-A-2 311 968**
**GB-A-1 051 587**
**GB-A-1 477 650**
**US-A-4 027 545**
**US-A-4 127 039**

(73) Proprietor: **INDUSTRIE PIRELLI S.p.A.**
**Piazzale Cadorna, 5**
**I-20123 Milan (IT)**

(72) Inventor: **Robecchi, Edoardo**
**Via Chiesa, 56**
**I-20099 Sesto S. Giovanni Milan (IT)**
Inventor: **Dell'Orto, Renato**
**Largo Piermarini, 17**
**I-20038 Seregno Milan (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

Courier Press, Leamington Spa, England.

## Description

The present invention concerns a flexible belt and its relative transmission and more particularly, it concerns a belt, made of an elastomeric material, comprising an annular body delimited by two outer base surfaces, and two lateral sides; at least one of the two surfaces of the outer base can be disposed, with a determined winding arc around the radially outermost surface of a pulley from which it receives, or to which it transmits motion, by means of friction.

The lateral sides of the annular body are always inactive, relative to the transmission of motion by means of friction.

As known, there already exist belts of the above-cited type, flat, for example, that are utilized in diverse industrial applications, especially owing to their high flexibility.

Generally speaking, the flat belts comprise an annular body, made from an elastomeric material wherein there are embedded inextensible cords, that are disposed parallelly to one another and directed longitudinally to the belt, one or more reinforcing layers made of fabrics, or as an alternative laminated with polyamides, or with polyesters.

Unfortunately, owing to the presence and characteristics of the above-cited reinforcing and embedding materials, in the elastomeric material, the said belts cannot be wouind around pulleys having, for example, very accentuated curvatures and, apart anything else, around pulleys with 15 or 16 mm diameters.

Consequently, the known transmissions have a limited usage and they can never result apt for actuating, for example, a washing-machine tub wherein, for one of the pulleys, even smaller diameters are indicated as necessary.

Moreover, at high speeds, flat belts can present a poor stability, with tending to shift axially, relative to the pulley on which they are mounted, with running the risk of progressively slipping out from the pulley itself.

However, no solution exists to-date, for permitting to solve all these cited drawbacks simultaneously.

In fact, if it is possible, on the one hand, to consider increasing the stability of the belt by having recourse to the stiffening of the relative reinforcing structure, on the other hand, there must be taken into account the consequent lesser adaptability of the transmission belt, with regard to pulleys having accentuated curvatures.

According to GB—A—1,477,650 a flat belt of elastomeric material disclosed in an example comprises a strip-form reinforcing sheating or a portion possessing tensile strength formed by two layers with fibers oriented at small angles to the longitudinal direction.

The two layers embedding fibers are connected together by a connecting layer free of reinforcing fibres.

Also this solution is not suitable to solve the drawbacks of the known belts.

In fact, the reinforcing sheating for substituting the longitudinal cords must have a high quantity of fibers with their predominant direction in the longitudinal direction of the belt.

Consequently also this belt can have a total transversal section which is not suitable for winding the same belt around pulley having very accentuated curvature.

In particular, such flat-belts could be subjected to same torsions on itself.

Hence, the aim of the present invention is a flexible belt comprising at least one base surface, partially wound around a pulley, from which it receives, or to which it transmits motion through friction, and the relative transmission, with both being devoid of all the above-cited drawbacks.

The object of the present invention is a flexible belt, made from an elastomeric material, suited for being mounted around at least two pulleys, upon whose outer surfaces there are exchanged frictional forces, useful for transmitting motion, said belt comprising an annular body delimited by two outer base surfaces and by two lateral sides, with at least one of the said base surfaces being active for the exchange of said frictional forces, and with both of said lateral sides being inactive for the exchange of said frictional forces, said belt comprising at least one group of three layers, two of said layers embedding discontinuous fibers whose direction is inclined and opposed to one another with respect to the longitudinal direction of the belt, the three said layers being directly in contact respectively with one another, with the annular belt body being devoid of any continuous, longiform and inextensible elements, said belt being characterized by the fact that the said two layers comprise fibers whose angle of inclination to said longitudinal direction, is at most 45°, and that the remaining third layer comprises discontinuous fibres directed transversally to the longitudinal direction of the belt, the modulus of rigidity under tensile stress, of the layers with said inclined fibres, measured in the longitudinal direction of the belt, being equal to each other.

What forms a further object of the present invention, is a drive belt system, comprising a flexible belt, made of an elastomeric material as cited and at least two pulleys on whose outer surfaces the belt is disposed according to a predetermined winding arc, and exchanges through friction, forces that are useful for transmitting motion, the longitudinal development of the belt between the two pulleys, being greater than the longitudinal development of the belt prior to its mounting between these said pulleys.

From here onwards, the expression "active base surface" is intended for indicating the belt surface that is destined, during contact with a corresponding resting surface in a pulley, for determining, by means of friction, an exchange of forces that are useful for transmitting motion.

Hence, what are included in the ambit of this invention, are flat belts and other belts whose shape, although diverse to flat, in a section transversal to the longitudinal direction of the belt is based upon the fact that at least one of the base surfaces is useful for the purpose of transmitting motion, through friction.

Therefore, in a same transmission, the belt could have just one of its base surfaces, always the same one, in contact on diverse pulleys, or even one of the base surfaces, for example, the lower one in contact with a pulley, and the upper one in contact with the other pulley, in the latter case with the consequent exchange of forces, through friction, of both of the two base surfaces of the belt.

Moreover, the expression "inactive sides", is intended to indicate the fact that the lateral surfaces of the belt, do not take part along with the pulleys in exchanging, by means of friction, the forces that are useful for transmitting motion.

Therefore, both sides, in any whatsoever configuration, are destined for always remaining inactive with regard to the pulleys, and they have the sole function of laterally delimiting the annular body of the belt.

The present invention will be better comprehended from the following detailed description, made solely by way of nonlimiting example, by referring to the figures of the attached drawing sheet, whereby:

Fig. 1 shows a perspective partial view of a term of the belt layers, according to the invention;

Figs. 2 and 3 show a transversal section of a belt and partially of a pulley, of the transmission according to the invention;

Figs. 4 and 5 show a transversal section of a further realization of a belt and partially of a pulley of the transmission according to the invention;

Fig. 6 shows a perspective view of the transmission, according to the invention;

Figs. 7 and 8 show further transversal sections, respectively of a belt and partially of a pulley, in a transmission according to the invention.

The present invention shall now be described relatively to a flexible belt, made of an elastomeric material, comprising in its more general form, an annular body delimited, above and below, by two outer base surfaces and by two lateral sides; each one of the base surfaces being apt for covering for a predetermined winding arc, a pulley from which it receives or, to which it transmits motion, through friction.

The lateral sides of the belt are realized in such a way as to remain inactive with respect to the effects of the exchange of forces, transmitted by means of friction, with the pulley surfaces.

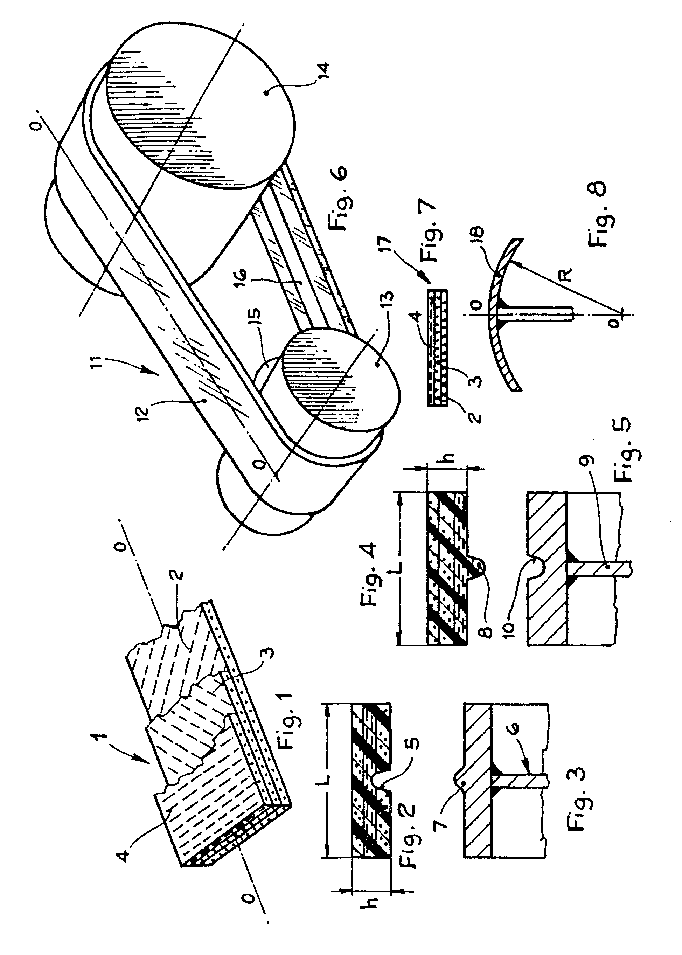

In the preferred example shown in Fig. 1, the belt 1 has a flat annular body defined by a transversal rectangular section, and comprising at least one group of three layers 2, 3, 4, of elastomeric material, each of which incorporates a plurality of discontinuous fibres, that are orientated in a single direction in the layer.

In the example of Fig. 1, the layers 2 and 3 comprise fibres that are inclined in the opposite direction relative to the longitudinal direction 0-0 of the belt, with the maximum angle of inclination being equal to 45° and the stretch modulus of the two layers in the longitudinal direction of the belt, are equal to each other, the fibres of one layer could have an angle of inclination opposed to that of the other layer with respect to the longitudinal direction of the belt, but with diverse values, and the fibres of one layer could be diverse to those of the other layer, provided that, in all the chosen solutions, it is verified that the fibres and the angles of inclination of the two layers 2 and 3, together with the elastomeric matereial are such that the stretch modulus of the layer 2, in the longitudinal direction of the belt, is equal to the stretch modulus of the layer 3. For preference, the angles of the two layers are symmetrical to one another.

Still for preference, the layers 2 and 3 comprise fibres having their angles of inclination greater than 18°, in one example, an angle of 20°.

In its turn, the layer 4 comprises discontinuous fibres directed transversally to the longitudinal direction of the belt.

As can be seen in Fig. 1, what constitutes the fundamental characteristic of the present belt, is the disposition of the layers 2, 3 4, with the sides directly in contact with each other, without the interpositioning of further layers, or reinforcements, with the fibres directed diversely from what is previously indicated.

Moreover, the present belt excludes layers with inextensible longiform elements, directed longitudinally to the annular body of the belt, such as, wires, cords and suchlike.

The elastomeric material of the layers, can have Shore-A hardnesses that are comprised between 60 and 90, and the percentage of the fibres incorporated in each layer with reference to 100 parts by weight of rubber, can be comprised between 5 and 50.

According to one example, each said layer can have a thickness of 0,6 mm.

The fibres can be of various materials, amongst others, particularly, of aramide resins, of nylon, of polyesther, or of other equivalent materials.

In particular, the fibres of each layer have a length that as an average can be comprised between 0.5 and 5 mm, a diameter between 10 $\mu$ (micron) and 400 $\mu$ (micron).

The thickness of each layer, is selected as a fucntion of the average length of the fibres, and it was found advantageous, for having a good unidirectional orientation of the fibres to maintain a thickness for the layers lesser than the average length of the fibres.

What constitutes a fundamental characteristic of the present flat belt, is the possibility for it to undergo elastic elongations, for example, in the order of 10% with a tensile stress of 20 Kg/cm$^2$ and to maintain said layer in a state of traction during exercise.

This characteristic and the corresponding elongation values depend upon the number of fibres present in the layers, upon the rubber matrix, upon the crossed angles between the fibres of the layers 2 and 3, upon the action of regulation of the shear stresses between the layers 2 and 3, during the elongation step where the action of regulation is due to the presence of the layer 4 having fibres at 90° with respect to the longitudinal direction gx the belt.

Generally the stretch modulus (modulus of rigidity under tensile stress) in the annular body of the belt, measured longitudinally, can vary from layer to layer, with assuming greater values in those layers wherein the inclined fibres have smaller angles.

In particular, we may cite, by way of example, the presence of layers having a modulus of rigidity under traction, of less than 10 $Kg/mm^2$ and however, in any section of the flat belt, longitudinal modulus of traction that cannot be compared in any way, with those relative to the flat belts having inexensible fabric, or laminated, or cords.

In practice, the present flat belt is characterized by the fact that the modulus of rigidity, under the tensile stress, measured in the longitudinal direction of the belt, is uniform in the entire transversal section of the annular body if compared to the flat belts having longitudinal, inextensible inserts and however, such as to assume values of less than 100 $Kg/mm^2$.

The belt 1 disclosed and illustrated with the term of layers could be formed by a greater number of layers provided that, in any whatsoever solution adopted, any whatsoever one of the layers, having fibres directed in one of the cited directions, is associated to the other two layers, each one of which incorporates fibres that are directed in the other two directions.

Hence, to the three layers of Fig. 1, the inner one of which embeds fibres forming an angle of +20°, there could, for example, be directly associated, in an underlying position, other two layers, one layer with fibres at 90° and the other with fibres inclined at −20°—i.e. in such a way as to constitute, as a whole, two terms having one common intermediate layer.

The modulus of rigidity under tensile stress, measured in the longitudinal direction of the belt, is uniform, seeing that the global longitudinal modulus of each of the various terms is substantially equal to one another.

According to some forms of realization, the present flat belt, for any whatsoever number of terns forming the annular body, is characterized by the following geometrical correlation (Fig. 2):

$$K=\frac{h}{L}=0.01—0.8$$

where *h* is the thickness of the belt; *L* is the width; and *K* is the ratio between the two sizes, with a value comprised in the above-cited range.

According to one example, the belt could have a thickness of 4 mm and a width of from 14 to 20 mm.

It was found that this ratio refers to flat belts which determine, with the pulleys to which they are associated, a high elastic belting, in particular on those pulleys having a very pronounced curvature.

In one embodiment, the invention comprises at least one groove 5 extended longitudinally to the belt.

In correspondence to the cited groove, at least one of the pulleys 6 (Fig. 3), on which the belt is partially wound, comprises a protuberance 7.

In another example, the means for contrasting the lateral shiftings of the belt comprise (Fig. 4) a protuberance 8 and, in correspondance of said protuberance, on at least one of the transmission pulleys 9, a groove 10 (Fig. 5).

In Fig. 6, there is again illustrated a belt drive system 11, comprising a flat belt 12, having at least one group of layers forming a tern (as seen in Fig. 1), and two pulleys 13 and 14, one of which having the lesser diameter, being provided with a protuberance 15 for penetrating into the groove 16 of the belt for the purpose of avoiding any axial shiftings of the belt from the axis 0-0 lying in the central plane of the transmission.

The belt described till now, for use on pulleys having substantially cylindrical outer surfaces, can be applied to pulleys with cambered surfaces.

For example, the belt 17 (Fig. 7) again formed with the layers 2, 3, 4, (shown in Fig. 1) can form part of a transmission where one of the pulleys, amongst other things the one having a lesser diameter (Fig. 8) assumes in a transversal section, a curvilinear configuration, having an arc of a circle with radius R, or even a parabolic, or an elliptical, or a hyperbolic arc.

In this solution, the same curvature of the pulley 18 can represent one of the means apt for obstaculating the lateral slipping of the belt 17 with respect to the central plane of the transmission 0-0.

The belt, described till now, with reference to the flat form, defined by a mid-plane containing the longitudinal axis and by two outer base surfaces directed parallelly above and below the mid-plane, can deviate from its flat form by assuming, on the outside, substantially flat forms; we intend by this term, configurations with curvilinear profiles in the sections transversal to the belt.

According to some realizations of the flat forms, there could be added, or subtracted, from the flat form above and below, two other portions of elastomeric material that are delimited, in their turn, in a section transversal to the belt, by external profiles, both concave or convex, or else, with one concave and the other convex, or vice-versa.

In another form of realization, the belt could have a flat form just on one base surface relative to the central mid-plane and, on the opposite base, it could assume a concave, or a convex profile, in its transversal section.

According to another form of embodiment, in its transversal section the belt could assume the form of a lens, with thus reducing the lateral sides to coincide with two lines.

The said solutions, relative to belts delimited by curvilinear profiles comprise, in their curvilinear form, further means, apart from the elastic one to which the belt is subjected, that are apt for contrasting the lateral shiftings of the belt.

In fact, these belts can be associated to pulleys that have, in their transversal section, an outer profile corresponding to the profiles of the belt, or even curvilinear profiles, with curvatures that are diverse for realizing a better coupling condition, between the contacting surfaces.

In practice, in the cited embodiments, in the absence of the above-cited grooves, or the protuberances, any tendency of the belt to shift laterally, relative to the pulley, is prevented owing to the transversal curvature of the pulley and of the belt, and even more so, owing to the high state of elastic traction of the pulley.

Furthermore, the variations described could also comprise outer curvilinear profiles, this time combined with a protuberance, or with a groove, or even both, to be joined to corresponding grooves, or to protuberances, on one, or on both the pulleys of the transmission.

In the solutions where the belt deviates from its flat form, the geometrical ratio "K" can refer to the average thickness and to the maximum widths of the belt.

It results as being quite evident how the belt, of the present invention, in all its illustrated and described forms, thanks to the characteristics of elasticity, can be advantageously applied onto transmissions where the distance between the pulley is fixed, and where the mounting of the belt requires the same to be stretched, in such a way that the belt's longitudinal development between the two pulleys, will result as being greater than the belt's longitudinal development, prior to its being mounted between the same pulleys.

The invention achieves all its prefixed aims.

In fact, the reinforcing structure, that is formed by elastomeric layers and by fibres (as already indicated), allows for the winding of the belt on pulleys having a very pronounced curvatures up to a value in diameter of 15, 16 mm with there being a considerable exchange of torque, between belt and pulley.

In practice, for belts having the indicated structure devoid of inextensible cords and suchlike, which are subjected to a stretching between the two pulleys, there is determined for the entire thickness, practically equal tractional states on the different layers.

In other words, the tensile stress of the outermost layer, does not differ, except for quite a modest extent, from the tensile stress of the innermost layer; for which reason no tangential forces are exercised, in the various layers between contiguous surfaces, which could create reciprocal detachments.

Moreover, the possibility of exploiting to the maximum, said stretching capacity of the elastomeric material, devoid of cords, and of increasing in this way, the corresponding radial load that can be exercised by the belt layers on the pulleys, with having a greater elastic grip on the same, can be had, as a result of adopting a belt whose base-width is very narrow.

Consequently, even the pulleys have a narrow width, with assuming masses that are lighter masses, with having lesser risks of starting off vibrations that could facilitate the phenomena of belt slipping, in the pulley's axial direction.

The special structure, defined by the tern of layers with inclined fibres and transversal fibres, allows moreover, for preventing the phenomena of instability arising in the belt body.

This result is not easily explicable, if not through supposition, given the complexity of the phenomena at play.

It can be held that, the two layers having equally inclined fibres with respect to the longitudinal direction of the belt allow, in the absence of continuous or suchlike cords, disposed longitudinally, for having a gradual stretching of the belt body, until a determined angle value is obtained in-between the two directions of the fibres, with a lesser angle of inclination of that of the starting angle.

In practice, it was verified that in the presence of any whatsoever kind of stresses these cited angular variations take place freely. Successively due to the said elasticity of the material, when these stresses cease, the said angles, in-between the fibres, return to their initial values.

The phenomena is moreover controlled by the presence of the layer of fibres disposed at 90° with respect to the longitudinal direction; said fibres tend to oppose the reduction of the angle of inclination, between the fibres of the other two layers with, in this way conferring particular elastic characteristics to the structure.

In practice, the present belt does not undergo torsions on itself, most probably owing to the controlling action of the layer of fibres at 90°.

Furthermore, the presence, in some realizations, of protuberances and of grooves on the belt and on the pulleys, or of the curvilinear surfaces of the pulleys, upon which the belt rests, constitutes yet another advantageous characteristic for obviating lateral shiftings of the belt, from the resting state, and from the correct alignment of the belt on the surfaces of the pulleys.

In particular, the presence on the surface of the belt (see Fig. 2), of the grooves 5 must not only be seen as an element for contrasting any whatsoever lateral shifting of the belt, but also as a further element that is useful for the transmission of motion.

In fact, the state of traction exercised on the belt, with the extension of the same, determines a contraction in the transversal sense, with a consequent tightenings of the groove 5, on the protuberance 7 (see Fig. 3) of the pulley.

Hence, the transmission of torque between the belt and the pulley, takes place both, through friction between the base surfaces, as well as through the gripping effect between the walls of the groove 5 and the walls of the protuberance 7.

Practically, and quite advantageously, the presence of a space 5, in the thickness of the belt, is not to the detriment of the torque but contributes towards increasing its value.

What has still to be pointed out is how; in the present belt, the interference between the belt-groove and the pulley-protuberance, or vice-versa, results as being constant and reliable through the passage of time, even in the presence of strong vibrations, as could be verified for a pulley joined to the tub in a washing-machine.

In fact, the high degree of elasticity that is inherent in the present belt, tends to maintain the relative groove in the position for being fitted onto the protuberance of the pulley, with having a corresponding, immediate contrast to any lateral side-slipping of the belt, and its exiting from its support on the pulley.

In practice, the belt behaves like an energy accumulator apt for storing great quantities of elastic energy through being stretched, which is ready, at any moment, to return this energy and to translate it into a belt fastening grip on the pulleys, every time that vibrations tend to take away the stretched belt from its winding conditions on the pulleys.

Furthermore, what is also considered to be advantageous in the present belt, is its greater fatigue life in respect of those traditional belts having reinforcing structures comprising elements that are inextensible in the longitudinal direction.

In fact, when winding on the pulleys, these belts of the state of the art are subjected to a flexional state, and the rubber parts, lying below the inextensible elements, that define the neutral axis, pass practically, from the condition where stresses are absent, to the state of compression.

As can be noted, this variation in the states, determines various drawbacks in the rubber, in the form of cuts and cracks and, in particular, a lesser fatigue resistance.

The present belt that is subjected, during the transmission of motion, to elastic stretchings which can, for example, be comprised in some applications between 5% and 15%, is always found in a state of traction for all the conditions both, before, during and after the winding on the pulleys.

Consequently, the present belt, in not having a pass from a null state of stress, to a state of compression, or from a state of traction to one of compression, presents a greater service life in respect of the above-said traditional belts.

Although just some forms of embodiment, of the present invention, have been illustrated and described here, they are also intended to comprise in their ambit all those possible variations of the inventive principle, that are available to the one skilled in the art; for example, the belt with the above-cited tern of layers, could have its entire base surface destined for coming in contact with the pulley provided with a plurality of longitudinal V-shaped grooves that couple with corresponding pulley grooves.

Furthermore, the transmission could comprise means for contrasting any lateral shiftings of the belt, that are applied on only one, or on both of the pulleys, for example, two annular grooves that are distanced apart, on the outermost surface of the pulley inside which the belt could sink one of its small portions, in the presence of lateral shiftings that involved the cited grooves, or still again for example, one or two lateral flanges.

## Claims

1. Flexible belt (1, 12), made from an elastomeric material, suited for being mounted around at least two pulleys (13, 14), upon whose outer surfaces there are exchanged frictional forces, useful for transmitting motion, said belt comprising an annular body delimited by two outer base surfaces and by two lateral sides, with at least one of the said base surfaces being active for the exchange of said frictional forces, and with both of said lateral sides being inactive for the exchange of said frictional forces, said belt comprising at least one group of three layers (2, 3, 4), two of said layers (2, 3) embedding discontinuous fibers whose direction is inclined and opposed to one another with respect to the longitudinal direction of the belt, the three said layers being directly in contact respectively with one other, with the annular belt body being devoid of any continuous, longiform and inextensible elements, said belt being characterized by the fact that the said two layers (2, 3) comprise fibers whose angle of inclination to said longitudinal direction is at most 45°, and that the remaining third layer (4) comprises discontinuous fibres directed transversally to the longitudinal direction of the belt, the modulus of rigidity under tensile stress, of the layers (2, 3) with said inclined fibres, measured in the longitudinal direction of the belt, being equal to each other.

2. Belt, as in Claim 1, characterized by the fact of comprising an annular body having an equal thickness throughout its entire width.

3. Belt, as in Claim 2, characterized by the fact of comprising an annular body having a rectangular transverse section.

4. Belt, as in Claim 1, characterized by the fact that in a section transverse to the belt, at least one of the base surfaces is delimited by a curvilinear profile.

5. Belt, as in any whatsoever of the previous Claims, characterized by the fact of comprising means (5—8) for counteracting the lateral shiftings of the belt on the pulleys (13, 14).

6. Belt, as Claim 5, characterized by the fact that said means comprise at least one groove (5), upon at least one base surface of the annular body, said groove being present over the entire longitudinal development of the belt.

7. Belt, as in Claim 5, characterized by the fact that said means comprise at least one protuberance (8), upon at least one base surface of the annular body, the said protuberance being present over the entire longitudinal development of the belt.

8. A belt drive system (11) comprising a flexible belt (1, 12) made of elastomeric material according to any preceding Claim and at least two pulleys (13, 14) on whose outer surfaces the belt is disposed, according to a predetermined winding arc, and exchanges by friction, forces that are useful for transmitting motion, the longitudinal development of the belt, between the two pulleys, being greater than the longitudinal development of the belt, prior to its mounting between these said pulleys.

9. A belt drive system, as in Claim 8, characterized by the fact of comprising means for opposing the lateral shiftings of the belt relative to the contacting surfaces of the pulleys.

10. A belt drive system, as in Claim 9, characterized by the fact that said means comprise at least one protuberance (8) extending longitudinally on at least one surface of the belt, and an annular groove (10) on at least one pulley, said protuberance being inserted into the said groove during the winding of the belt on the pulley.

11. A belt drive system, as in Claim 9, characterized by the fact that said means comprise at least one groove (5) extending longitudinally on at least one surface of the belt and at least one protuberance (7) on at least one pulley.

12. A belt drive system, as in Claim 8, characterized by the fact of comprising, on at least one pulley, a surface delimited on its sides by two annular grooves, said belt being disposed between the two grooves, and penetrating with a portion of elastomeric material into one, or the other groove, in the event of lateral shifting, in the axial direction to the pulley, in one sense, or in the opposite sense to it.

## Patentansprüche

1. Biegsamer Riemen (1, 12) aus elastomerem Material, der dafür geeignet ist, rund um wenigstens zwei Riemenscheiben (13, 14) angeordnet zu werden, an deren Außenflächen Reibungskräfte ausgetauscht werden, die für Bewegungsübertragung nützlich sind, wobei der Riemen einen ringförmigen Körper aufweist, der durch zwei äußere Basisflächen und zwei Seitenflächen begrenzt ist, von denen wenigstens eine der Basisflächen für den Austausch der Reibungskräfte wirksam ist, und wobei die beiden Seitenflächen für den Austausch der Reibungskräfte unwirksam sind, der Riemen wengistens eine Gruppe aus drei Lagen (2, 3, 4) aufweist, von denen in zwei Lagen (2, 3) diskontinuierliche Fasern eingebettet sind, die mit Bezug auf die Längsrichtung des Riemens schräg und zueinander entgegengesetzt vorliegen, die drei Lagen jeweils in direkter Berührung miteinander stehen, und wobei der ringförmige Riemenkörper von irgendwelchen kontinuierlichen, langgestreckten und undehnbaren Elementen frei ist, dadurch gekennzeichnet, daß die genannten beiden Lagen (2, 3) Fasern umfassen, deren Schrägwinkel zur Längsrichtung höchstens 45° beträgt, und daß die verbleibende dritte Lage (4) diskontinuierliche Fasern aufweist, die zur Längsrichtung des Riemens quer gerichtet sind, wobei die Starrheitsmoduln oder Steifigkeitsmoduln unter Zugbeanspruchung der beiden Lagen (2, 3) mit den schrägen Fasern, gemessen in Längsrichtung des Riemens, einander gleich sind.

2. Riemen nach Anspruch 1, dadurch gekennzeichnet, daß er einen ringförmigen Körper aufweist, welcher über seine gesamte Breite gleiche Dicke hat.

3. Riemen nach Anspruch 2, dadurch gekennzeichnet, daß er einen ringförmigen Körper aufweist, der rechteckigen Querschnitt hat.

4. Riemen nach Anspruch 1, dadurch gekennzeichnet, daß in einem Querschnitt des Riemens wenigstens eine der Basisflächen durch ein gekrümmtes Profil begrenzt ist.

5. Riemen nach irgendeinem der vorhergehenden Ansprüche, dadurch gekennzeichnet, daß Mittel (5—8) vorgesehen sind, um seitlicher Verschiebung des Riemens an den Riemenscheiben (13, 14) entgegenzuwirken.

6. Riemen nach Anspruch 5, dadurch gekennzeichnet, daß diese Mittel wenigstens eine Nut (5) an wenigstens einer Basisfläche des ringförmigen Körpers umfassen, die auf der gesamten Länge des Riemens vorhanden ist.

7. Riemen nach Anspruch 5, dadurch gekennzeichnet, daß die Mittel wenigstens einen Vorsprung (8) auf wenigstens einer Basisfläche des ringförmigen Körpers umfassen, der auf der gesamten Länge des Riemens vorhanden ist.

8. Riemenantrieb (11) umfassend einen biegsamen Riemen (1, 12) aus elastomerem Material nach irgendeinem der vorhergehenden Ansprüche, und wenigstens zwei Riemenscheiben (13, 14), an deren Außenflächen der Riemen in Übereinstimmung mit einem vorbestimmten Umschlingungsbogen angeordnet ist und durch Reibung Kräfte austauscht, die für Bewegungsübertragung nützlich sind, wobei die Länge des Riemens zwischen den beiden Riemenscheiben größer als die Länge des Riemens vor seiner Anordnung zwischen diesen beiden Riemenscheiben ist.

9. Riemenantrieb nach Anspruch 8, dadurch gekennzeichnet, daß Mittel vorgesehen sind, um seitlichen Verschiebungen des Riemens relativ zu den Berührungsflächen der Riemenscheiben entgegenzuwirken.

10. Riemenantrieb nach Anspruch 9, dadurch gekennzeichnet, daß die genannten Mittel wenigstens einen Vorsprung (8), der sich in Längsrichtung an wenigstens einer Fläche des Riemens erstreckt, und eine ringförmige Nut (10) an wenigstens einer Riemenscheibe umfassen, wobei während des Wickelns des Riemens auf die Riemenscheibe der Vorsprung in die genannte Nut eingesetzt wird.

11. Riemenantrieb nach Anspruch 9, dadurch gekennzeichnet, daß die genannten Mittel wenigstens eine Nut (5), die sich in Längsrichtung an wenigstens einer Fläche des Riemens erstreckt, und wenigstens einen Vorsprung (7) an wenigstens einer Riemenscheibe umfassen.

12. Riemenantrieb nach Anspruch 8, dadurch gekennzeichnet, daß an wenigstens einer Riemenscheibe eine Fläche vorgesehen ist, die an ihren Seiten durch zwei ringförmige Nuten begrenzt ist, und der Riemen zwischen den beiden Nuten angeordnet ist und im Fall seitlicher Verschiebung in axialer Richtung der Riemenscheibe in einer oder in der entgegengesetzten Richtung mit einem Teil des elastomeren Materials in die eine oder die andere Nut eintritt.

**Revendications**

1. Courroie flexible (1, 12) réalisée en un matériau élastomère, convenant pour être montée autour d'au moins deux poulies (13, 14), au niveau des surfaces extérieures desquelles s'échangent des forces de friction, utiles pour la transmission d'un déplacement, ladite courroie comportant un corps annulaire délimité par deux surfaces de base extérieures et par deux faces latérales, au moins l'une desdites surfaces de base étant active pour l'échange desdites forces de frottement, et deux desdites faces latérales étant inactives pour l'échange desdites forces de frottement, ladite courroie comportant au moins un groupe de trois couches (2, 3, 4), deux desdites couches (2, 3) contenant en elles des fibres discontinues dont les directions sont inclinées et opposées l'une à l'autre par rapport à la direction longitudinale de la courroie, lesdites trois couches étant en contact directement les unes avec les autres, le corps de la courroie annulaire étant dépourvu d'éléments continus, allongés et inextensibles, ladite courroie étant caractérisée en ce que lesdites deux couches (2, 3) comportent des fibres, dont l'angle d'inclinaison par rapport à ladite direction longitudinale est égal au maximum à 45°, et que la troisième couche restante (4) comporte des fibres discontinues s'étendant transversalement par rapport à la direction longitudinale de la courroie, les modules de rigidité sous contrainte de traction, mesurés dans la direction longitudinale de la courroie, des couches (2, 3) comportant lesdites fibres inclinées étant égaux.

2. Courroie selon la revendication 1, caractérisée en ce qu'elle comporte un corps annulaire possédant une épaisseur identique sur toute sa largeur.

3. Courroie selon la revendication 2, caractérisée en ce qu'elle comporte un corps annulaire possédant une section transversale rectangulaire.

4. Courroie selon la revendication 1, caractérisée en ce que dans une section transversale par rapport à la courroie, au moins l'une des surfaces de base est délimitée par un profil curviligne.

5. Courroie selon l'une quelconque des revendications précédentes, caractérisée en ce qu'elle comporte des moyens (5—8) servant à s'opposer aux décalages latéraux de la courroie sur les poulies (13, 14).

6. Courroie selon la revendication 5, caractérisée en ce que lesdits moyens comprennent au moins une rainure (5) ménagée dans au moins une surface de base du corps annulaire, ladite rainure étant présente sur toute l'étendue longitudinale de la courroie.

7. Courroie selon la revendication 5, caractérisée en ce que lesdits moyens comprennent au moins une protubérance (8) située sur au moins une surface de base du corps annulaire, ladite protubérance étant présente sur toute l'étendue longitudinale de la courroie.

8. Système (11) d'entraînement par courroie comportant une courroie flexible (1, 12) réalisée en un matériau élastomère selon l'une quelconque des revendications précédentes et au moins deux poulies (13, 14), sur les surfaces extérieures desquelles la courroie est disposée, selon un arc d'enroulement prédéterminé, la courroie échangeant, par frottement, des forces qui sont utiles pour transmettre un déplacement, l'étendue longitudinale de la courroie entre les deux poulies étant supérieure à l'étendue longitudinale de la courroie avant son montage entre lesdites poulies.

9. Système d'entraînement par courroie selon la revendication 8, caractérisé en ce qu'il comporte des moyens destinés à s'opposer aux décalages latéraux de la courroie par rapport aux surfaces de contact des poulies.

10. Système d'entraînement par courroie selon la revendication 9, caractérisé en ce que lesdits moyens comprennent au moins une protubérance (8) qui s'étendant longitudinalement sur au moins une surface de la courroie, et une rainure annulaire (10) située sur au moins une poulie, ladite protubérance étant insérée dans ladite rainure pendant l'enroulement de la courroie sur la poulie.

11. Système d'entraînement par courroie selon la revendication 9, caractérisé en ce que lesdits moyens comprennent au moins une rainure (5), qui s'étend longitudinalement sur au moins une surface de la courroie, et au moins une protubérance (7) située sur au moins une poulie.

12. Système d'entraînement par courroie selon la revendication 8, caractérisé en ce qu'il comprend, sur au moins une poulie, une surface délimitée sur ses côtés par deux rainures annulaires, ladite courroie étant disposée entre les deux rainures et pénétrant par une partie réalisée en un matériau élatomère dans l'une ou l'autre des rainures, dans le cas d'un décalage latéral, dans la direction axiale par rapport à la poulie, dans un sens ou dans le sens opposé.

Fig. 6

Fig. 7

Fig. 8

Fig. 5

Fig. 4

Fig. 1

Fig. 2

Fig. 3